# EUROPEAN PATENT APPLICATION

(11) **EP 0 821 537 A2**
(43) Date of publication of application: **28.01.1998**
(21) Application number: 97305633.6
(22) Date of filing: 25.07.1997
(51) Int. Cl.: H04Q 7/32, H04Q 7/22

(54) **Mobile station having cellular and pager modes**

(30) Priority: 26.07.1996 US 687757
(71) Applicant: NOKIA MOBILE PHONES LTD., 02150 Espoo (FI)
(72) Inventor: Vaisanen, Ahti, San Diego, California 92014 (US); Shah, Bharat, San Diego, California 92129 (US); Lee, Tony, San Diego, California 92128 (US); Honkasalo, Harri, Bedford, Texas 76021 (US)
(74) Representative: Potter, Julian Mark

(57) **Abstract**

A method and apparatus for providing combined cellular and paging service through a mobile station in a cellular system. In the method and apparatus of this information, the mobile station serves a dual function as a pager or cellular phone. Selection between the dual functions is controlled by the user of the mobile station, who may chose to operate the mobile station in either the cellular mode or the pager mode. When in the cellular mode the mobile station can roam, make calls to the system , and receive calls from the system. When in pager mode the mobile station does not receive calls from the system, but instead receives only paging messages. The same system and radio interface is used in both the pager and cellular mode, and the method and apparatus may be implemented to make use of functional system blocks and features that are common to mobile station operation both as a pager, and as a cellular phone.

## Description

This invention relates to paging in telecommunications systems and, more particularly to an apparatus and method for providing combined cellular and paging service in a mobile station by utilizing the air interface of the cellular service for the paging service.

Advances in telecommunications systems technology have resulted in a variety of systems and services being available for system users. These systems include both paging systems providing paging services, and cellular telephone systems providing mobile telephone services. Both paging systems and cellular telephone systems provide services that allow subscribers to these systems to increase their accessibility and be reachable, potentially at all times, as long as the subscribers remain in the service areas covered by their systems.

In a typical paging system a subscriber is provided with a paging device through which the subscriber receives paging messages that may include text messages or phone numbers of persons desiring to contact the subscriber. A person desiring to contact the subscriber of a paging system would typically first attempt to contact the subscriber by making a phone call to the subscriber's telephone, and then make a phone call to special paging number to deliver a paging message if the subscriber was unavailable by telephone. The paging messages are received over a system air interface as the subscriber moves throughout the coverage area of the paging system. Paging systems typically operate in the 150 MHz frequency range.

In a cellular system, a person desiring to contact the cellular subscriber would simply dial the phone number of the cellular subscriber to contact the subscriber at the subscriber's cellular telephone. As long as the cellular subscriber kept the cellular telephone powered on the subscriber would be accessible when located within the coverage area of the cellular system. Cellular systems typically operate in the 800-900 MHz and/or 1800-1900 MHz frequency ranges.

Each of the paging and cellular telephone systems have advantages relative to one another. One drawback of using a cellular system to remain accessible over time is that cellular air time charges may be expensive, even for calls made from a second party to the cellular telephone. Since charges in a paging system are typically much less than in a cellular system and are usually based on a fixed fee, a paging system provides a relatively inexpensive way to be accessible in comparison to a cellular system. In a paging system, however, the subscriber must be near a telephone in order to be able to answer urgent pages. In a cellular system the subscriber is able to answer calls immediately.

One way to utilize the separate advantages of paging and cellular systems, while reducing the effects of their disadvantages, is to subscribe to both types of systems and use both concurrently. A dual subscriber to both types of systems could remain available by keeping his pager on at all times and using his cellular telephone to answer urgent pages. A dual subscriber could also reduce costs by making sure that calls to the subscriber were directed to the pager number and by keeping the cellular telephone turned off when not in use to avoid receiving calls that result in expensive air time charges. Subscribing to and using both systems concurrently has disadvantages, however, in that the paging device and cellular telephone usually are implemented in physically separate devices and the dual subscriber must carry and keep track of both devices. Even if the paging device and cellular phone are integrated into a single case the dual subscriber must still control each device separately. Furthermore, a paging device and cellular telephone in a single case may be bulky. Also, the dual subscriber has to keep track of billing and maintain the service for two different systems.

The present invention provides a method and apparatus for providing combined cellular and paging service through a mobile station in a cellular system. In the method and apparatus, the mobile station serves a dual function as a pager or a cellular phone. Selection between the dual functions is controlled by the user of the mobile station, who may chose to operate the mobile station in either the cellular mode or the pager mode. When in the cellular mode the mobile station can make calls to, and receive calls from, the system normally. When in pager mode the mobile station will not receive calls from the system, but will instead receive only paging messages. The same system and radio interface is used in both the pager and cellular modes, and the method and apparatus may be implemented to make use of functional system blocks and features that are common to mobile station operation both as a pager and as a cellular phone. The mobile station remains registered in the system while in pager mode and may roam without disturbing the paging function.

Use of the method and apparatus removes the need for a person to carry both a cellular phone and a pager if that person wants to be accessible and able to make calls at all times, but does not always desire to receive phone calls at the cellular phone. Since the same system and radio interface are used, problems in coordinating the subscriptions to two services from two separate system operators are also prevented.

Additionally, since functional system blocks and features are common to mobile station operation both as a pager or as a cellular phone, the method and system can be implemented by a system operator with a lower cost than would be required to install a separate paging system.

In an embodiment in accordance with the invention, the user of a mobile station is provided with a displayed menu item allowing the user to select between operating the mobile station in the cellular or in the pager mode. As an altemative, the user may be allowed to select between cellular mode or pager mode by setting a switch on the mobile station. Upon the user's selection of the cellular mode, the mobile station functions as a normal cellular phone. Upon the user's selection of the pager mode, the mobile station will not receive phone calls but instead will receive only paging messages. An indication of the forwarding functions activated for the mobile station prior to the selection of the pager mode is also stored in memory within the mobile station upon selection of the pager mode.

In an embodiment in accordance with the invention, when the pager mode is selected at the mobile station by the user, a first message is sent to the system from the mobile station. The first message includes commands that cause the system to forward calls made to the mobile station to a paging message center. The forwarding of the calls may be made unconditional. Thereafter, while the mobile station is in the pager mode, no attempt is made to alert the mobile station, and the mobile station does not directly receive phone calls. The mobile station remains registered in the system while in the pager mode and may roam without disturbing the paging function. If it is necessary to page the mobile station, its location is known to the system, and it can be paged immediately. Outgoing calls can also be made from the mobile station while the mobile station is in the pager mode. When a call made to the mobile station is forwarded to the paging message center, the call is handled by a paging function in the message center. The paging function handles the call by sending a paging voice prompt message to the party calling the mobile station. The voice prompt informs the calling party that paging mode is presently active for the mobile station and directs the calling party to input a paging message to be delivered to the mobile station if the calling party desires to page the mobile station. If the paging message is to be sent to the mobile station, a second message including the paging message is sent from the network to the mobile station.

When the mobile station is in the pager mode and the cellular mode is selected at the mobile station's menu, the call forwarding feature status saved upon the pager mode selection is retrieved from the memory within the mobile station. A second message is then sent from the mobile station to the system. The second message includes commands that cause the system to reinstate the previously activated call forwarding features and remove the unconditional forwarding of calls made to the mobile station to the paging message center. Thereafter, the mobile station receives phone calls, subject to any activated call forwarding features.

Optionally, there is provided a telecommunications system having a mobile station and a network having a method of receiving a paging message at a mobile station, the method comprising the steps of: detecting a first selection of a mode at the mobile station, said first selection being for a paging mode; storing a call forwarding status in the mobile station, said call forwarding status being indicative of a forwarding feature active for the mobile station during detection of said first selection in said step of detecting; transmitting a first message from the mobile station to the fixed network over an air interface, said first message including first control information, wherein said first control information includes an indication that the paging mode has been selected in the mobile station; receiving a second message at the mobile station over said air interface, said second message including information from a caller, wherein said caller has attempted a phone call to the mobile station; detecting a second selection of a mode at the mobile station, said second selection being for a cellular mode; and, transmitting, in response to detecting said second selection, a third message from the mobile station to the fixed network over said air interface, said third message including second control information, wherein said second control information includes an indication that the cellular mode has been selected at the mobile station.

Optionally, there is provided in a telecommunications system, a mobile station for operating in a pager mode or a cellular mode, said mobile station comprising; an input device for allowing a user of the mobile station to select a plurality of modes including a pager mode and a cellular mode; a controller coupled to said input device, said controller for detecting a selection of said pager mode at said input device, and, in response to detecting said selection of said pager mode, generating a first message including a command that activates, in the system, an unconditional call forwarding of calls made to the mobile station to a paging center and, further, said controller for detecting a selection of said cellular mode at said input device, and, in response to detecting said selection of said cellular mode, generating a second message including a command that deactivates said unconditional forwarding of calls made to the mobile station to said paging center; and a transmitter, coupled to said controller, for transmitting said first and second messages to the system over an air interface.

Optionally, there is provided in a telecommunications system apparatus for providing paging service and cellular service on a plurality of communications channels according to a common air interface standard, said apparatus comprising; a mobile station including: an input device for allowing a user of the mobile station to select a plurality of modes including a pager mode and cellular mode; a controller, said controller coupled to said input device and for detecting a selection of said pager mode at said input device, and, in response to detecting said selection of said pager mode, generating a first message including a command that activates, in the system, an unconditional call forwarding of calls made to the mobile station to a paging number and, further, said controller for detecting a selection of said cellular mode at said input device, and, in response to detecting said selection of said cellular mode, generating a second message including a command that deactivates said unconditional forwarding of calls made to the mobile station to the paging number; and a transmitter, coupled to said controller, for transmitting said first and second messages to the system over the air interface; and, a paging network including: a receiver for receiving said first and second messages; a MSC, said MSC being coupled to said receiver for receiving said first message from said receiver and, in response to receiving said first message, for activating unconditional forwarding of calls made to the mobile station to said paging number, said MSC further receiving said second message from said receiver and in response to receiving said second message, deactivating said unconditional forwarding of calls made to the mobile station to said paging number; a paging center coupled to said MSC for receiving a call made to said paging number for generating a paging prompt to the calling party of said call for receiving calling party information input in response to said prompt by said calling party, and for generating a third message; and a SMS center coupled to said MSC, said SMS center for receiving said third message from said paging center and for initiating transmission of a fourth message to said mobile station over said air interface, wherein said fourth message includes said calling party information.

A more complete understanding of the method and apparatus of the present invention may be had by reference to the following detailed description, provided by way of example only, when read in conjunction with the accompanying drawings wherein:
Figure 1 illustrates a block diagram of a telecommunications system constructed according to an embodiment of the invention;
Figure 2 illustrates a block diagram of a mobile station constructed and operated according to the embodiment of figure 1;
Figure 3 is a flow diagram showing process steps performed within a mobile station according to the embodiment of figure 1; and
Figure 4 is a flow diagram showing process steps performed within the system infrastructure according to the embodiment of figure 1.

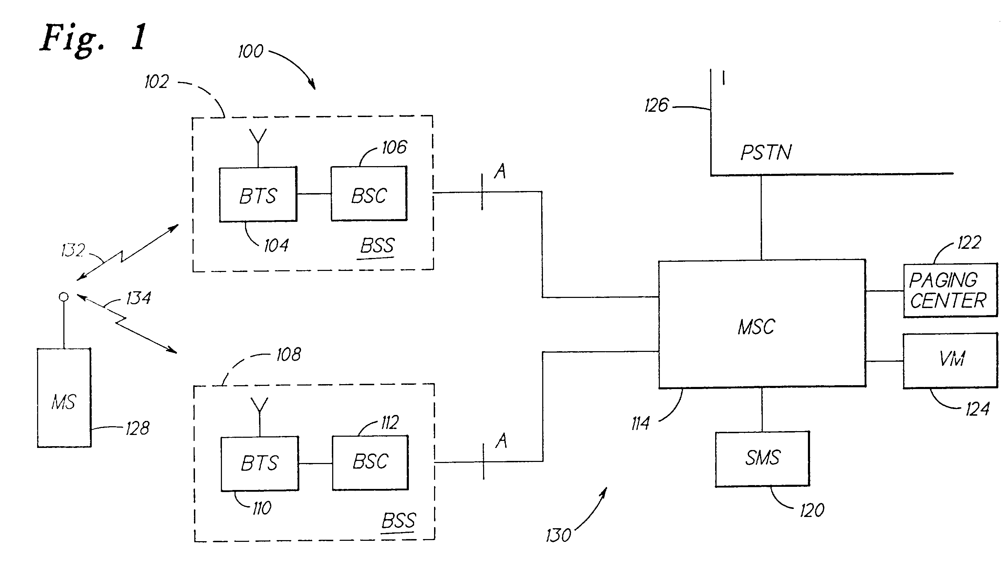

Figure 1 illustrates a block diagram of a telecommunications network 100 constructed according to an embodiment of the invention. Network 100 comprises a cellular system 130 comprising mobile switching center (MSC) 114, base station subsystems (BSSs) 102 and 108, short message service center (SMS) 120, voice mail center (VM) 124, and paging center (122). Cellular system 130 also includes mobile station (MS) 128. BSS 102(108) comprises base transceiver station (BTS) 104(110), and base switching center 106(112). A subscriber who subscribes to service provided by the operator of cellular system 130, may use MS 128 to make and receive phone calls over the radio interface 132(134) between MS 128 and BTS 104(110) as the subscriber moves throughout the coverage area of cellular system 130. Each of BTSs 104 and 110 provide coverage over a separate geographic area of the system. BSCs 106 and 112 interface with MSC 114 and provide control of BTSs 104 and 110, respectively. Cellular system 130 is connected to a public switched telephone network (PSTN) 126 to allow subscribers of Cellular system 130 to make and receive phone calls from the landline public network. In the embodiment of figure 1, cellular system 130 may operate according to the Telecommunications Industry Association/ Electronic Industry Association (TIA/EIA) personal communications system (PCS) 1900 system standard.

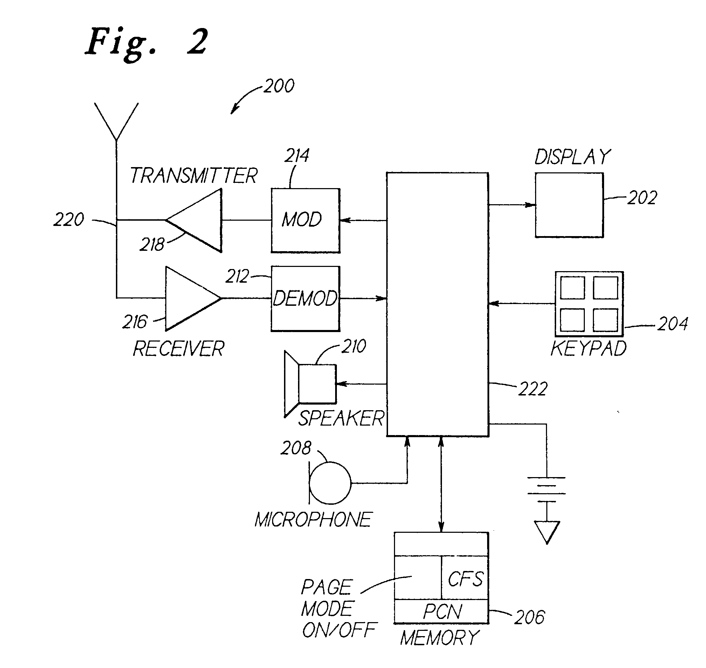

Referring now to figure 2, therein is a block diagram showing portions of a mobile station 128 constructed and operated according to the embodiment of figure 1. Mobile station 128 comprises display 202, keypad 204, memory 206, microphone 208, speaker 210, demodulator 212, modulator 214, receiver 216, transmitter 218, antenna 220, and controller 222. Controller 222 provides signals to transmitter 218 and receives signals from receiver 216. The signals may include control signals or voice/data communications between MS 128 and cellular system 130.

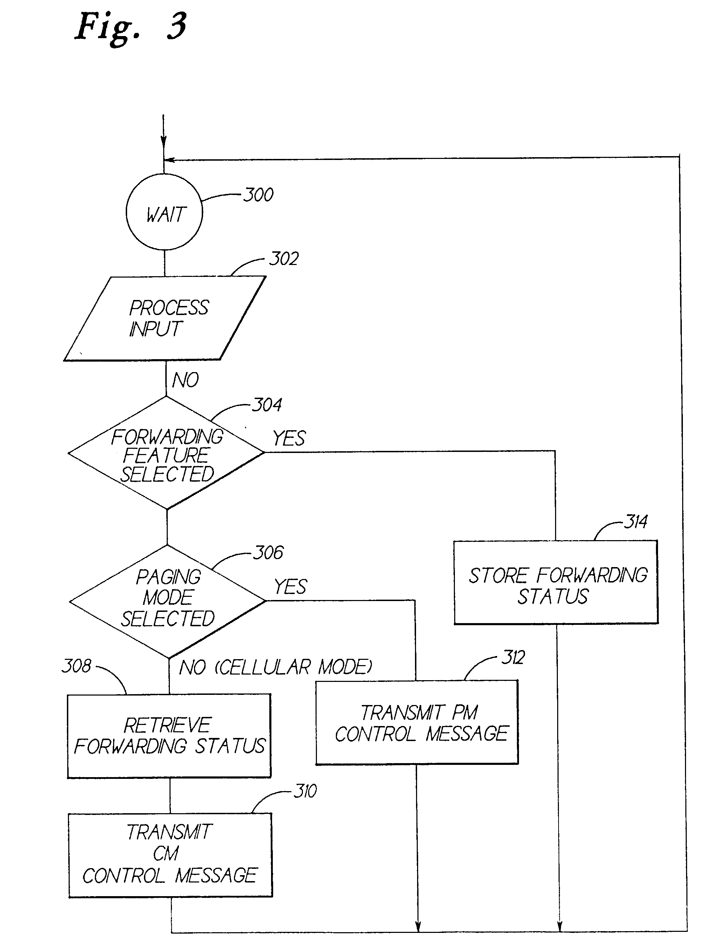

Referring now to figure 3, therein is a flow diagram showing process steps performed within mobile station 128 according to the embodiment of figure 1. The process begins when mobile station 128 registers in cellular system 130 and the process moves to the wait state of step 300. While the process is in the wait state of step 300, mobile station 128 may be operating in either cellular mode or pager mode. By selecting either cellular mode or pager mode from a menu displayed on display 202, the user of mobile station 128 can switch back and forth between operation in the cellular mode or the pager mode. When the user makes a keypad menu selection a process input is received at step 302. Altematively the selection between cellular or pager mode may be made by setting a switch on the mobile station. Also, when the user is operating in cellular mode, the subscriber may select a call forwarding feature to be activated though transmission of a message to system 130. This forwarding feature may be any conventional forwarding feature offered by the system operator, such as call forwarding don't answer, call forwarding unconditional to a specific number entered by the subscriber, etc. When a forwarding feature is selected at the keypad and transmitted to the system 130, the selection is also received by controller 222 as a process input at step 302.

After a process input is received by controller 222 at step 302 the process moves to step 304. At step 304 controller 222 determines whether the process input is a selection of a forwarding feature. If it is determined that the process input is the selection of a forwarding feature, the process moves to step 314. At step 314 controller 222 stores information on the forwarding feature selection as the current forwarding status (CFS) in memory 206. The process then retums to the wait state of step 300. If however, at step 304, it is determined that the process input received at step 302 is not the selection of a forwarding feature, the process moves to step 306. At step 306 controller 222 determines whether the process input is a selection of pager mode. If mobile station 128 is initially in cellular mode the determination mode at step 306 will be affirmative. If it is determined that the process input is the selection of pager mode, the process moves to step 312. At step 312 controller 222 initiates transmission of a pager mode (PM) control message to system 130. The PM control message includes information that causes MSC 114 to unconditionally forward all calls received in system 130 for mobile station 128 to paging center 122. This PM control message may be a call forwarding message type or a general type signal message formatted specifically as a PM control message with the forwarding number of the paging center being stored in the network. The process then returns to the wait state of step 300. While mobile station 128 is in pager mode, and the process in the wait state of step 300, calls will not be received at the mobile station 128. However mobile station 128 remains registered in system 130, and may roam throughout network 100. If it is necessary to page mobile station 128, its location will be known to the network 100 and it can be paged immediately. Calls may also be made from mobile station 128 without disturbing the paging mode. If however, at step 306, it is determined that the process input is not an indication of selection of pager mode, it is an indication of a selection of the cellular mode and the process moves to step 308. If mobile station 128 is initially in pager mode the determination at step 306 will be negative and the process will move to step 308. At step 308 controller 222 retrieves the current forwarding status (CFS) that is stored in memory 206. Next, at step 310, controller 222 initiates transmission of a cellular mode(CM) control message to system 130. The CM control message may be a call forwarding type message or, alternatively, a general type signal message formatted specifically for deactivating the paging mode for the particular mobile station from which it is received. The call forwarding type CM control message may be a call forwarding type message that reinstates any call forwarding conditions, including the condition of no forwarding, that were saved in step 314, and that deactivates the unconditional call forwarding to the paging center. The general signal message type CM control message may include a field including the call forwarding conditions saved in step 314. The network then has information available on what call forwarding conditions to reinstate. The process then returns to the wait state of step 300. While mobile station is in the cellular mode, and the process is in the wait state of step 300, calls will be received at the mobile station 128, subject to any activated call forwarding. The PM control messages and CM control messages transmitted from mobile station 128 to system 130 thus can be seen to initiate functions within system 130 that cause mobile station 128 to operate in the pager mode or in the cellular mode within system 130.

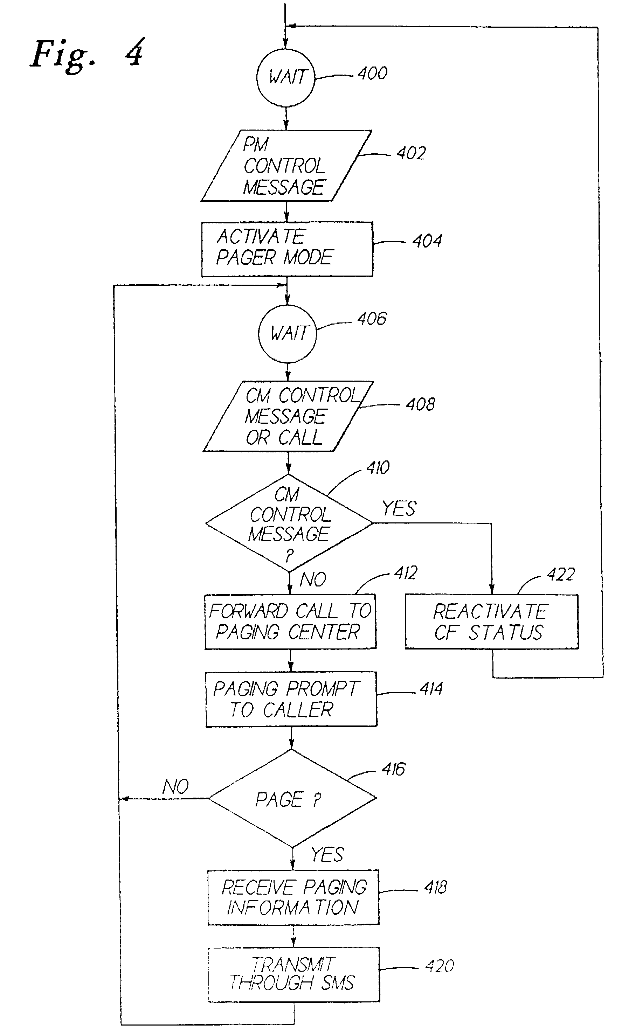

Referring now to figure 4, therein are shown process steps performed within the system infrastructure according to the embodiment of figure 1. Figure 4 shows the process as it occurs when mobile station 128 is initially operating in the cellular mode and the process is initially in the wait state of step 400. While the process is in the wait state of step 400 mobile station 128 functions as a normal cellular phone, and a user of mobile station 128 may receive calls according to normal system forwarding conditions. The process leaves the wait state of step 400 when a PM control message is received from mobile station 128 at step 402. The PM control message may be a call forwarding message type or, alternatively, a general type signal message formatted specifically as a PM control message with the forwarding number of the paging center being stored in the network. Next, at step 404, MSC 114 activates the pager mode for mobile station 128 by activating unconditional call forwarding of all calls made to mobile station 128 to the paging center 122. MSC 114 then can initiate forwarding to paging center 122. For a general type signal message formatted specifically as a PM control message, a number (PCN) assigned to paging center 122 may be a proprietary number used only by the system operator and accessible only for use when the mobile station is in pager mode. For a call forwarding message type PM control message, the number of paging center 122 (PCN) may be stored in the memory 206 of mobile station 128 and an unconditional call forwarding message to that number may be automatically formatted by controller 222 and transmitted to system 130 and MSC 114, upon selection of the pager mode by the mobile station 128.

Once the pager mode is activated in system 130 for the mobile station 128, the process moves to the wait state of step 406. While in the wait state of step 406 the process may receive an input at step 408 indicating that a CM control message, transmitted from mobile station 128 upon selection of the cellular mode, or a call for mobile station 128 has been received in the system. After receiving the input at step 408 the process moves to step 410 where it is determined if the input was a CM control message. If it is determined that the input was not a CM control message, the input was a call and the process moves to step 412. At step 412 the call is forwarded to paging center 122. Next, at step 414, a paging voice prompt is played to the calling party. The paging voice prompt informs the calling party that mobile station 128 is in the pager mode and allows the calling party to select whether or not the calling party wishes to page the user of mobile station 128. Next, at step 416, the process determines if the calling party selected to page the user of mobile station 128. If the calling party does not select to page the user of mobile station 128, the process retums to the wait state of step 406.

If, however, the calling party selects to page the user of mobile station 128, the process moves to step 418 and prompts the calling party to enter paging information in the form of a text message that may include the calling party's phone number. Next, at step 420, paging center 122 automatically initiates transmission of a paging message, including the text message, through SMS 120, by automatically dialing a call to SMS 120 and inputting information to SMS 120 that initiates transmission of a message to mobile station 128 through the SMS 120 of system 130. As an option, if the call is made from another mobile station an SMS confirmation can be sent back when the page is successful or, if the call is made from a landline phone, a confirmation call back to the SMS service number may be made by a paging center 122 message. The process then retums to the wait state of step 406.

If however, at step 410, it is determined that the input was a CM control message received from mobile station 128 upon the selection of the cellular mode, the process moves to step 422. The CM control message may be a call forwarding type message or, alternatively, a general type signal message formatted specifically for deactivating the paging mode for the particular mobile station from which it is received. The call forwarding type CM control message may be a call forwarding type message that reinstates any call forwarding conditions, including the condition of no forwarding, that were saved in step 314 of figure 3, and deactivates the unconditional call forwarding to the paging center 122. The general type signal CM control message may include a field including the call forwarding conditions saved in step 314. At step 422, in response to receiving the CM control message, MSC 114 reactivates any forwarding status included in the CM control message and cancels the unconditional call forwarding to the paging center. Next the process moves back to the wait state of step 400. Mobile station 128 thereafter receives phone calls subject to any activated call forwarding conditions, and calls are not forwarded to paging center 122.

As an altemative to storing call forwarding conditions in the mobile station 128, as is done in step 314 of figure 3, all active call forwarding conditions for mobile stations operating in the system may be stored in the network. For example, call forwarding conditions for mobile station 128 may be stored in a visitors location register (VLR) located in MSC 114. In this altemative embodiment, the general type signal CM control message may then be used to deactivate the pager mode, and the MSC 114 may reactivate the call forwarding conditions stored in the VLR of MSC 114.

While the embodiment of the invention operating according to the TlA/EIA PCS 1900 system standard has been shown, one skilled in the art will realize that cellular system 104 may operate according to any other cellular system standard, for example, GSM, TlA/EIA IS-136, or TlA/EIA IS-95 code division multiple access(CDMA), that incorporates a SMS or message function, similar to that of SMS 120, or allows the use of such a function in the system specifications.

For example, an embodiment within a system operating according to IS-95 may be implemented. In the IS-95 embodiment the pager mode (PM) control message may be implemented by sending a feature code message indicating to the system that the pager mode has been selected in the mobile station 128. Altemately, a registration message with additional fields may be sent as the PM control message. The paging message may be sent on the paging channel or on the traffic channel. On the paging channel the paging message may be sent as a data burst message with a BURST_TYPE field set for SMS and the message in a CHARi field. However, a maximum allowed two paging channels slots restricts the maximum number of characters that can be sent on the paging channel. For sending a larger number of characters, a traffic channel paging message may be sent by first sending a page message using the service option 6 on the paging channel. The mobile station 128 always responds with service option 6. The system then sends to the mobile station 128 a channel assignment message that indicates a traffic channel to be used to transmit the paging message. The paging message is then sent as a data burst message with the BURST_TYPE field set for SMS and the message in the CHARi fields. After the mobile station 128 receives the paging message the system then sends a Release Order to the mobile station 128, and releases the traffic channel. The cellular mode (CM) control message may also be implemented by sending a feature code that indicates to the system that the cellular mode has been selected in the mobile station 128. Altemately, a registration message with additional fields may be sent as the CM control message.

As such, and although the method and apparatus of the present invention has been illustrated and described with regard to presently preferred embodiments thereof, it will be understood that numerous modifications and substitutions may be made to the embodiments described, and that numerous other embodiments of the invention may be implemented, without departing from the spirit and scope of the invention as defined in the following claims.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during prosecution of this application or of any such further application derived therefrom.

## Claims

1. In a telecommunications system having a mobile station and a network, wherein said network and said mobile station communicate over an air interface comprising a plurality of communication channels according to a common air interface standard, a method of paging the mobile station, said method comprising the steps of:
receiving a first message over the air interface from the mobile station at the fixed network, said first message including control information;
activating, responsive to receiving said first message, a pager mode for the mobile station for forwarding calls made to the mobile station to a message center;
forwarding a call made to the mobile station to said message center;
receiving said call at said message center;
deriving, in response to receiving said call at said message center, paging information from the calling party; and
transmitting, in response to receiving said paging information, a second message from the network to the mobile station over the air interface, said second message including said paging information.

2. The method of claim 1 wherein said control information comprises first control information, and wherein said method further comprises the steps of;
receiving a third message from the mobile station at the network over the air interface, said third message including second control information; and,
deactivating, in response to receiving said third message, said pager mode for the mobile station.

3. The method of claim 2, further comprising, before said step of receiving a first message, the steps of;
detecting a selection of a pager mode in the mobile station;
transmitting a first message from the mobile station, said first message including control information indicating that pager mode has been selected in the mobile station; and
wherein said step of receiving a first message comprises receiving said first message transmitted in said step of transmitting.

4. The method of claim 3, further comprising the step of storing a call forwarding status in the mobile station, said call forwarding status being indicative of a forwarding feature, said forwarding feature being activated for the mobile station during detection of the selection of a pager mode in said step of detecting.

5. The method of claim 3 or claim 4, further comprising the step of storing a call forwarding status in the network, said call forwarding status being indicative of a call forwarding feature, said call forwarding feature being activated for the mobile station during detection of the selection of the pager mode in said step of detecting.

6. The method of claim 4 or claim 5 wherein said method further comprises, after said step of transmitting, in response to receiving said paging information for each of said calls, a second message, the steps of;
detecting a selection of a cellular mode in the mobile station;
transmitting a third message from the mobile station, said third message including second control information including an indication that the cellular mode has been selected in the mobile station; and
wherein said step of receiving, from the mobile station, a third message at the network comprises receiving said third transmitted message.

7. The method of claim 6, wherein said second control information includes said call forwarding status, and wherein said step of deactivating, in response to receiving said third message, comprises the step of activating said forwarding feature for the mobile station.

8. The method of any of claims 1 to 7, wherein said step of activating a pager mode comprises activating, for calls made to the mobile station, unconditional call forwarding to the message center.

9. The method of any of claims 2 to 8, wherein said the system operates according to the IS-95 system standard, and wherein said first and third messages comprise IS-95 feature code messages.

10. The method of claim 9, wherein said second message comprises a paging channel data burst message.

11. The method of claim 10, wherein said second message comprises a traffic channel data burst message.

12. The method of any of claims 2 to 11, wherein the system operates according to the IS-95 system standard, and wherein said first and third messages comprise IS-95 registration messages.

13. The method of any of claims 1 to 12, wherein deriving paging information from the calling party of said call comprises generating a prompt to the calling party said prompt indicating to the calling party that paging information is to be input to the system.
